# EUROPÄISCHE PATENTSCHRIFT

(11) **EP 2 297 498 B1**
(45) Veröffentlichungstag und Bekanntmachung des Hinweises auf die Patenterteilung: **10.09.2014**
(21) Anmeldenummer: 09776972.3
(22) Anmeldetag: 06.07.2009
(51) Int. Cl.: F16K 25/00

(54) **VENTIL MIT HOHER MITTLERER BETRIEBSDAUER**
VALVE HAVING A LONG AVERAGE OPERATING LIFE
SOUPAPE À LONGUE DURÉE MOYENNE DE FONCTIONNEMENT

(30) Priorität: 11.07.2008 DE 102008032716
(43) Veröffentlichungstag der Anmeldung: 23.03.2011
(73) Patentinhaber: KNORR-BREMSE Systeme für Nutzfahrzeuge GmbH, 80809 München (DE)
(72) Erfinder: UHLAND, Thomas, 74397 Pfaffenhofen (DE); RÖTHER, Friedbert, 74389 Cleebronn (DE)
(74) Vertreter: Schönmann, Kurt
(86) Internationale Anmeldenummer: PCT/EP2009/004861
(87) Internationale Veröffentlichungsnummer: WO 2010/003608

(56) Entgegenhaltungen:
- EP-A- 0 579 896
- EP-A- 0 877 184
- EP-A- 1 394 450
- EP-A- 1 564 458
- EP-A- 1 619 428
- US-A- 3 968 971
- US-A- 4 486 002

## Beschreibung

Die Erfindung betrifft ein Ventil mit einem gegenüber einem Ventilsitz in einem Ventilgehäuse beweglichen Ventilkörper, wobei zwischen dem Ventilkörper und dem Ventilgehäuse ein Raum gebildet wird, der durch zumindest eine Dichtung unterteilt oder begrenzt ist, wobei die zumindest eine Dichtung ein Trägerelement aus Metall umfasst, und wie es beispielsweise aus Dokument EP-A-877 184 bekannt ist.

Ventile, insbesondere Pneumatikventile, besitzen meist mehrere Dichtungen zur Trennung einzelner Arbeitskammern beziehungsweise einzelner Funktionsräume zwischen einem beweglichen Ventilkörper und einem Ventilgehäuse beziehungsweise zur Abdichtung des Ventilgehäuses. Die Dichtungen sind in der Regel als O-Ringe oder als aufgebrachte Formdichtungen jeweils aus Elastomerwerkstoffen realisiert. Elastomerwerkstoffe unterliegen jedoch einem Alterungsprozess, wodurch unter anderem eine nachlassende Rückstellfähigkeit mit einer daraus resultierenden Undichtigkeit der Dichtung unter Belastung resultiert.

Insbesondere im Nutzfahrzeugbereich sind Robustheit und lange Lebensdauer, das heißt eine große mittlere Betriebsdauer, eine wichtige Vorraussetzung für den Betrieb. Unter der mittleren Betriebsdauer wird hier allgemein die Betriebsdauer bei erstmaliger Inbetriebnahme des Ventils bis zum ersten Defekt mit Ausfallwirkung verstanden, wobei eine Fehlschaltung aufgrund nachlassender Dichtungswirkung ebenfalls als Ausfall gewertet wird. Insbesondere ständig unter Druck beziehungsweise ständig hohen Temperaturen oder Temperaturwechseln ausgesetzte Ventildichtungen können die gestellten Anforderungen bezüglich der Robustheit beziehungsweise der Lebensdauer nur schwer erfüllen, wodurch verkürzte Wartungsintervalle, oder im Defektfall Fehlschaltungen, die Folge sein können.

Der vorliegenden Erfindung liegt daher die Aufgabe zugrunde, ein Ventil bereitzustellen, das bei verringertem Montageaufwand hohen Anforderungen hinsichtlich der Lebensdauer genügt beziehungsweise beim Betrieb unter erhöhten Temperaturen oder ständigen Temperaturwechseln eine höhere mittlere Betriebsdauer aufweist.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die Erfindung baut auf dem gattungsgemäßen Ventil dadurch auf, dass die zumindest eine Dichtung den Raum mehrfach an verschiedenen Dichtstellen unterteilt, dass der Ventilkörper aus mehreren unabhängig voneinander beweglichen Teilen aufgebaut ist und das die Dichtstellen an verschiedenen voneinander unabhängig beweglichen Teilen des Ventilkörpers angeordnet sind.

Die Verwendung einer Dichtung mit einem Trägerelement aus Metall erlaubt eine dauerelastische Abdichtung, wobei die Elastizität durch Verwendung eines Federstahls als Trägerelement weiter erhöht werden kann. Eine derartige Dichtung weist ein geringeres Setzverhalten und eine lange Lebensdauer auf und ist dauerhaft für höhere Temperaturen geeignet. Gemäß der vorliegenden Erfindung sollen also bislang aus einem Elastomerwerkstoff hergestellte Dichtungen in dem Ventil zumindest teilweise durch metallische Dichtungen, das heißt Dichtungen, die zumindest teilweise aus einem Metall hergestellt sind, ersetzt werden.

Insbesondere kann vorgesehen sein, dass die zumindest eine Dichtung vollständig aus Metall gefertigt ist. Ist die zumindest eine Dichtung vollständig aus Metall gefertigt, so ist die Dichtung im Vergleich zu einer aus einem Elastomer gefertigten Dichtung besonders temperaturbeständig, wodurch die mittlere Betriebsdauer bei einem Betrieb unter hohen Umgebungstemperaturen erhöht wird.

Alternativ kann vorgesehen sein, dass die zumindest eine Dichtung eine Beschichtung aus einem Elastomer umfasst. Weist die Dichtung eine das Trägerelement umgebende Beschichtung aus einem Elastomer auf, so ist die Dichtwirkung mit einer vollständig aus einem Elastomer hergestellten Dichtung vergleichbar, weist jedoch gegenüber dieser eine höhere Temperaturbeständigkeit und eine längere Lebensdauer auf. Dies lässt sich insbesondere durch das nicht alternde Trägerelement aus Metall begründen.

Besonders bevorzugt ist, dass das Trägerelement aus Metall zumindest eine Sicke als federndes Element umfasst. Eine Sicke, das heißt eine rinnenförmige Vertiefung beziehungsweise Erhöhung, kann zum Ausgleich von Unebenheiten an dem beweglichen Ventilkörper, zum Beispiel einem beweglichen Magneten, und dem Ventilgehäuse verwendet werden. Auf diese Weise kann eine dauerhafte ausreichende Dichtwirkung erzeugt werden.

Weiterhin kann vorgesehen sein, dass die zumindest eine Dichtung mehrere nicht parallel zur Dichtrichtung angeordnete Dichtungslagen umfasst. Durch die Verwendung mehrerer nicht parallel zur Dichtrichtung übereinander angeordneter Dichtungslagen ist die Dichtwirkung der einzelnen Dichtungen verbesserbar. Die Anordnung der Dichtungslagen kann dabei vorzugsweise senkrecht zur Dichtrichtung erfolgen.

Erfindungsgemäss ist vorgesehen, dass die zumindest eine Dichtung den Raum mehrfach an verschiedenen Dichtstellen unterteilt. Durch die Verwendung eines einzelnen Bauteils, welches an mehreren unterschiedlichen Dichtstellen eine Abdichtung ermöglicht, ist eine vereinfachte Montage des Ventils realisierbar.

Erfindungsgemäss ist in diesem Zusammenhang desweiteren vorgesehen, dass der Ventilkörper aus mehreren unabhängig voneinander beweglichen Teilen aufgebaut ist und dass die Dichtstellen an verschiedenen voneinander unabhängig beweglichen Teilen des Ventilkörpers angeordnet sind. Das verwendete Bauteil kann gleichzeitig an mehreren separat beweglichen Bauteilen des Ventilkörpers eine Dichtwirkung bereitstellen.

Es kann auch vorgesehen sein, dass der zwischen Ventilgehäuse und Ventilkörper gebildete Raum durch einen O-Ring und/oder eine aufgebrachte Formdichtung weiter unterteilt ist, wobei der O-Ring und/oder die Formdichtung aus einem Elastomer bestehen. Je nach Verwendungszweck des Ventils kann es sinnvoll sein, nur einen Teil der in dem Ventil vorhandenen Dichtungen durch eine Dichtung mit einem Trägerelement aus Metall zu ersetzen und die übrigen Dichtungen weiterhin in herkömmlicher Weise aus einem Elastomerwerkstoff zu fertigen. Dies erlaubt den Rückgriff auf bekannte Fertigungsverfahren und ist, insbesondere falls nicht alle Dichtungen des Ventils erhöhten Belastungen ausgesetzt sind, hinsichtlich der mittleren Betriebsdauer nicht von Nachteil.

Es kann vorgesehen sein, dass das Ventil ein 2/2-Wegeventil ist. Ein 2/2-Wegeventil ist ein häufig verwendetes Ventil, das auch in für die Lebensdauer des Ventils ungünstigen Umgebungen eingesetzt wird.

Alternativ kann auch vorgesehen sein, dass das Ventil ein 3/2-Wegeventil ist. Auch 3/2-Wegeventile werden häufig in für die Lebensdauer ungünstigen Umgebungen eingesetzt.

Im Zusammenhang mit der vorliegenden Erfindung ist es von besonderem Vorteil, wenn eine pneumatische Getriebesteuerung mit zumindest einem erfindungsgemäßen Ventil ausgestattet ist. Gerade eine pneumatische Getriebesteuerung ist aufgrund häufiger Schaltvorgänge, hohen Betriebstemperaturen beziehungsweise ständigen Temperaturschwankungen und dauerhaft an den Ventilen der pneumatischen Getriebesteuerung anliegenden hohen Schaltdrücken auf Ventile mit einer hohen mittleren Betriebsdauer angewiesen. Eine pneumatische Getriebesteuerung stellt also hohe Anforderungen an die verwendeten Ventile.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform eines erfindungsgemäßen Ventils;
- Figur 2: eine zweite Ausführungsform eines erfindungsgemäßen Ventils;
- Figur 3: eine dritte Ausführungsform eines erfindungsgemäßen Ventils und
- Figur 4: einen Querschnitt durch eine Dichtung.

In den folgenden Zeichnungen bezeichnen gleiche Bezugszeichen gleiche oder gleichartige Teile.

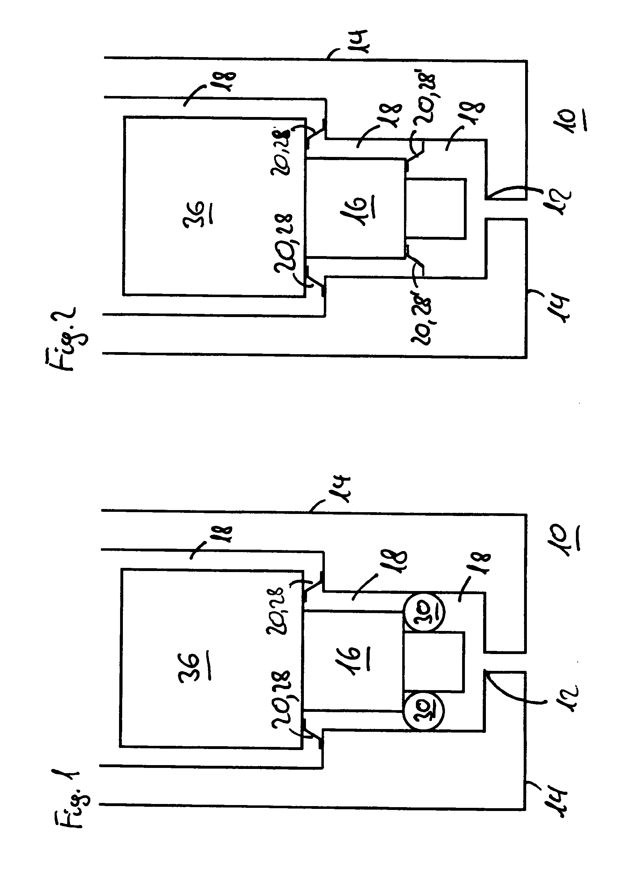

Figur 1 zeigt eine erste Ausführungsform eines erfindungsgemäßen Ventils. Das dargestellte Ventil 10 umfasst ein Ventilgehäuse 14 mit einem Ventilsitz 12, wobei sich im Inneren des Ventilgehäuses 14 ein Ventilkörper 16 befindet, der gegenüber dem Ventilgehäuse 14 beweglich ist. Der obere Teil des beweglichen Ventilkörpers ist als eine elektromagnetische Betätigungseinrichtung 36 ausgebildet. Beispielsweise kann die elektromagnetische Betätigungseinrichtung 36 als ein einfacher Permanentmagnet ausgebildet sein und durch das Bestromen einer nicht dargestellten Spulenwicklung, die an dem Ventilgehäuse 14 angeordnet ist, eine Kraft zum Bewegen des Ventilkörpers 16 aufbringen. Zwischen dem Ventilkörper 16 und dem Ventilgehäuse 14 wird ein Raum 18 gebildet, der durch eine Dichtung 20 an einer Dichtstelle 28 und einen O-Ring 30 in mehrere Bereiche unterteilt wird. Der O-Ring 30 kann dabei üblicherweise aus einem Elastomerwerkstoff hergestellt sein. Die an der Dichtstelle 28 angeordnete Dichtung 20 umfasst zumindest ein Trägerelement aus Metall, das beispielsweise aus einem Federstahl hergestellt sein kann. Die mit einem Trägerelement 22 aus Metall ausgestattete Dichtung 20 ist zwischen dem Ventilgehäuse 14 und dem Ventilkörper 16 verspannt, so dass ein Anpressdruck zwischen den beiden Teilen die Dichtung an der vorgesehenen Position hält und die dichte Verbindung zwischen der Dichtung 20 und dem Ventilgehäuse 14 beziehungsweise dem Ventilkörper 16 herstellt. Die Dichtung 20 kann beispielsweise als eine Metallsickendichtung, das heißt als ein elastomerbeschichtetes Trägerblech, ausgeführt sein. Bei einer derartigen Ausführungsform besitzt die Dichtung eine definierte, elastische Dichtgeometrie, wodurch sie eine lang anhaltende Dichtwirkung erhält, die durch die Verwendung von Federstahl nochmals verbessert werden kann. Die Dichtwirkung kann beispielsweise durch eine Sicke, das heißt eine rinnenförmige Vertiefung beziehungsweise Erhöhung, in der Dichtung 20, insbesondere in dem Trägerblech, erzielt werden. Die Sicke wirkt als federndes Element der Dichtung 20 und gleicht Unebenheiten des beweglichen Ventilkörpers 16 und des Ventilgehäuses 14 aus. Die Unterteilung des Raums 18 in mehrere gegeneinander abgedichtete Bereiche erzeugt mehrere voneinander getrennte Arbeitskammern beziehungsweise Funktionsräume, die jeweils Wirkflächen zum pneumatischen Ansteuern des Ventils 10 bereitstellen können, wobei die pneumatischen Steuerleitungen und Anschlüsse der Einfachheit halber nicht dargestellt sind. Die verschiedenen Arbeitskammern beziehungsweise Funktionsräume können jedoch auch in unterschiedlichen Positionen des Ventilkörpers 16 den einzelnen Positionen zugeordnete unterschiedliche Druckluftverbindungen freigeben. Der Einfachheit halber sind hierfür notwendige Anschlussleitungen ebenfalls nicht dargestellt. Durch die Verwendung eines Trägerelements aus Metall kann bei geeigneter Formgebung die notwendige Bauhöhe im Bereich der Dichtstelle 28 gegenüber einer herkömmlichen Elastomerdichtung verringert werden, wodurch die Baulänge des Ventils 10 verringert werden kann. Denkbar ist auch, dass die Dichtung 20 den Raum 18 insgesamt begrenzt, dass heißt für eine Abdichtung des Raumes 18 nach außen hin sorgt und dabei beispielsweise zwischen zwei separaten Gehäuseteilen des Ventilgehäuses 14 angeordnet ist. Weiterhin ist es möglich, dass der Ventilkörper 16 aus mehreren voneinander unabhängig beweglichen Bauteilen aufgebaut ist, zum Beispiel mehreren Magneten, die nicht in direktem Kontakt zueinander stehen. Der zwischen Ventilgehäuse 14 und Ventilkörper 16 eingeschlossene Raum 18 kann in diesem Fall auch nicht einfach zusammenhängend sein und von der Dichtung 20 mehrfach an verschiedenen Stellen in nicht zusammenhängenden Bereichen des Raumes 18 weiter unterteilt werden.

Figur 2 zeigt eine zweite Ausführungsform eines erfindungsgemäßen Ventils. Im Gegensatz zu der in Figur 1 dargestellten Ausführungsform des Ventils 10 ist bei der in Figur 2 dargestellten Ausführungsform der aus der Figur 1 bekannte O-Ring 30 durch eine Dichtung 20 an einer Dichtstelle 28' ersetzt worden, die ebenfalls einen Träger aus Metall umfasst. Die in Figur 2 dargestellte

Ausführungsform umfasst daher nur noch Dichtungen 20, die einen Träger aus Metall aufweisen.

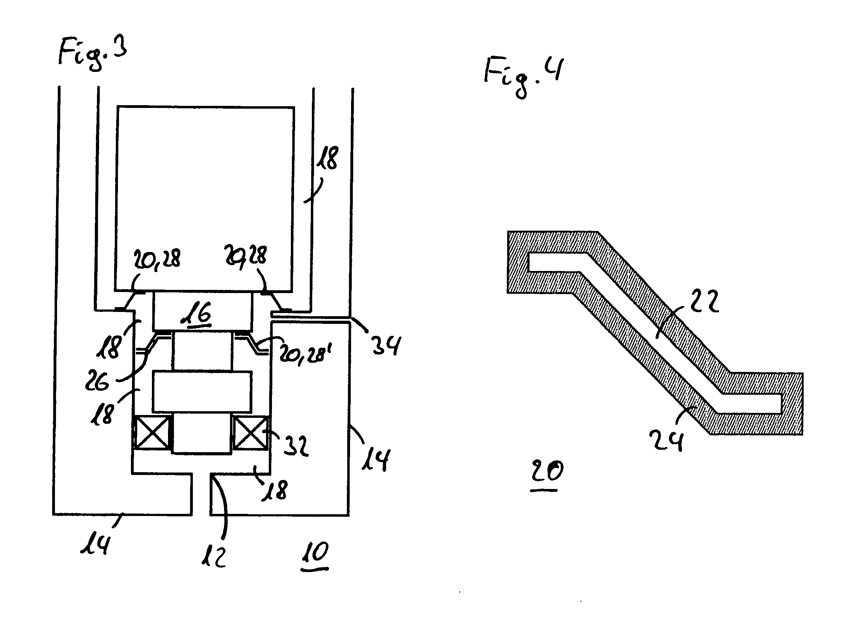

Figur 3 zeigt eine dritte Ausführungsform eines erfindungsgemäßen Ventils. Bei der in Figur 3 dargestellten Ausführungsform des Ventils 10 ist die Dichtung 20 an der Dichtstelle 28' mit zwei senkrecht zur Dichtungsrichtung übereinander liegenden Dichtungslagen 26 ausgeführt. Dies kann beispielsweise zum Verbessern der Dichtwirkung der Dichtung 20 verwendet werden. Weiterhin ist an dem dem Ventilsitz des Ventils 10 zugewandten Ende des Ventilkörpers 16 eine Formdichtung 32 aus einem Elastomerwerkstoff angeordnet. Über einen Anschluss 34 für Steuerluft kann ein Teil des Raumes 18, der zwischen der Dichtstelle 28 und der Dichtstelle 28' liegt, belüftet werden. Auf diese Weise kann über Steuerflächen eine Kraft auf den Ventilkörper 16 ausgeübt werden, um diesen innerhalb des Ventilgehäuses 14 zu bewegen. Die Verwendung beziehungsweise das Vorsehen weiterer Betätigungseinrichtungen, zum Beispiel der aus den Figuren 1 und 2 bekannten elektromagnetischen Betätigungseinrichtung oder einer Rückstellfeder, ist denkbar.

Figur 4 zeigt einen Querschnitt durch eine Dichtung. Die dargestellte Dichtung 20 umfasst ein Trägerelement 22 aus Metall und eine Beschichtung 24, die das Trägerelement 22 zumindest teilweise einhüllt. Das Trägerelement 22 kann beispielsweise aus einem Federstahl gefertigt sein, so dass aufgrund der Form und der Anordnung der Dichtung an der Dichtstelle eine Dichtwirkung erzielbar ist. Das Trägerelement 22 ist Vorraussetzung für eine Dauerelastizität der Dichtung 20. Dabei kann eine einfache in dieser Figur nicht dargestellte Sicke in dem Trägerelement 22 eine wesentliche Grundlage für die dauerelastische Dichtwirkung bilden. Insbesondere altert das Trägerelement 22 nicht beziehungsweise nicht vorzeitig, wenn die Dichtung dauernd unter Druck steht beziehungsweise hohen Betriebstemperaturen oder großen Temperaturwechseln ausgesetzt wird. Die Beschichtung 24 kann beispielsweise aus einer dünnen Elastomerschicht bestehen, um die Dichtwirkung der Dichtung 20 an den aus den Figuren 1 bis 3 bekannten Dichtstellen 28, 28' zu verbessern.

Das erfindungsgemäße Ventil ist besonders standfest und robust, so dass sich sein Einsatz insbesondere in der Fahrzeugtechnik anbietet, wo besonderer Wert auf eine hohe mittlere Betriebsdauer gelegt wird. Besonders bevorzugt ist dabei die Verwendung des Ventils an Stellen im Fahrzeug, die während des Betriebs hohe Temperaturen erreichen. Insbesondere ist in diesem Zusammenhang eine pneumatische Getriebesteuerung des Fahrzeugs zu nennen.

### Bezugszeichenliste

- 10: Ventil
- 12: Ventilsitz
- 14: Ventilgehäuse
- 16: Ventilkörper
- 18: Raum
- 20: Dichtung
- 22: Trägerelement
- 24: Beschichtung
- 26: Dichtungslage
- 28: Dichtstelle
- 28': Dichtstelle
- 30: O-Ring
- 32: Formdichtung
- 34: Anschluss Steuerluft
- 36: elektromagnetische Betätigungseinrichtung

## Patentansprüche

1. Ventil (10) mit einem gegenüber einem Ventilsitz (12) in einem Ventilgehäuse (14) beweglichen Ventilkörper (16), wobei zwischen dem Ventilkörper (16) und dem Ventilgehäuse (14) ein Raum (18) gebildet wird, der durch zumindest eine Dichtung (20) unterteilt oder begrenzt ist, wobei die zumindest eine Dichtung (20) ein Träger-element (22) aus Metall umfasst, **dadurch gekennzeichnet,**
- **dass** die zumindest eine Dichtung (20) den Raum (18) mehrfach an verschiedenen Dichtstellen (28, 28') unterteilt,
- **dass** der Ventilkörper (16) aus mehreren unabhängig voneinander beweglichen Teilen aufgebaut ist und
- **dass** die Dichtstellen (28, 28') an verschiedenen voneinander unabhängig beweglichen Teilen des Ventilkörpers (16) angeordnet sind.

2. Ventil (10) gemäß Anspruch 1, **dadurch gekennzeichnet, dass** die zumindest eine Dichtung (20) vollständig aus Metall gefertigt ist.

3. Ventil (10) gemäß Anspruch 1, **dadurch gekennzeichnet, dass** die zumindest eine Dichtung (20) eine Beschichtung (24) aus einem Elastomer umfasst.

4. Ventil (10) gemäß einem der vorhergehenden Ansprüche, **dadurch gekennzeichnet, dass** das Trägerelement (22) aus Metall zumindest eine Sicke als federndes Element umfasst.

5. Ventil (10) gemäß einem der vorhergehenden Ansprüche, **dadurch gekennzeichnet, dass** die zumindest eine Dichtung (20) mehrere nicht parallel zur Dichtrichtung angeordnete Dichtungslagen (26) umfasst.

6. Ventil (10) gemäß einem der vorhergehenden Ansprüche, **dadurch gekennzeichnet, dass** der zwischen Ventilgehäuse (14) und Ventilkörper (16) gebildete Raum (18) durch einen O-Ring (30) und/oder eine aufgebrachte Formdichtung (32) weiter unterteilt ist, wobei der O-Ring (30) und/oder die Formdichtung (32) aus einem Elastomer bestehen.

7. Ventil (10) gemäß einem der vorhergehenden Ansprüche, **dadurch gekennzeichnet, dass** das Ventil (10) ein 2/2-Wegeventil ist.

8. Ventil (10) gemäß einem der Ansprüche 1 bis 6, **dadurch gekennzeichnet, dass** das Ventil (10) ein 3/2-Wegeventil ist.

9. Pneumatische Getriebesteuerung mit einem Ventil (10) gemäß einem der vorhergehenden Ansprüche.

## Claims

1. Valve (10) comprising a valve body (16) mobile relative to a valve seat (12) and a valve housing (14), with a space (18) being formed between said valve body (16) und said valve housing (14), that is subdivided or limited by at least one seal (20), wherein said at least one seal (20) encloses a carrier element (22) made of metal, **characterised in**
- **that** said at least one seal (20) subdivides said space (18) several times at different sealing sites (28, 28'),
- **that** said valve body (16) is composed of a plurality of parts mobile independently of each other, and
- **that** said sealing sites (28, 28') are disposed at different parts of said valve body (16), which are mobile independently of each other.

2. Valve (10) according to Claim 1, **characterised in that** said at least one seal (20) is completely made of metal.

3. Valve (10) according to Claim 1, **characterised in that** said at least one seal (20) comprises a coating (24) made of an elastomer.

4. Valve (10) according to any of the preceding Claims, **characterised in that** said carrier element (22) made of metal comprises at least one bead as resilient element.

5. Valve (10) according to any of the preceding Claims, **characterised in that** said at least one seal (20) comprises a plurality of sealing layers (26) disposed in a non-parallel arrangement relative to the sealing direction.

6. Valve (10) according to any of the preceding Claims, **characterised in that** said space (18) formed between said valve housing (14) and said valve body (16) is further subdivided by an O-ring (30) and/or by an applied moulded seal (32), with said O-ring (30) and/or said moulded seal (32) consist of an elastomer.

7. Valve (10) according to any of the preceding Claims, **characterised in that** the valve (10) is a 2/2-way valve.

8. Valve (10) according to any of the Claims 1 to 6, **characterised in that** the valve (10) is a 3/2-way valve.

9. Pneumatic transmission controller provided with a valve (10) according to any of the preceding claims.

## Revendications

1. Soupape (10) comprenant un corps de soupape (16) mobile relativement à un siège de soupape (12) et un carter de soupape (14), à un espace (18) étant formé entre ledit corps de soupape (16) et ledit carter de soupape (14), lequel est subdivisé ou limité par au moins un joint d'étanchéité (20), dans lequel ledit au moins un joint d'étanchéité (20) renferme un élément de support (22) fait en métal, **caractérisée en ce**
- **que** ledit au moins un joint d'étanchéité (20) subdivise ledit espace (18) plusieurs fois aux points d'étanchéification différents (28, 28'),
- **que** ledit corps de soupape (16) est composé d'une pluralité de pièces mobiles l'une indépendamment de l'autre, et
- **que** lesdits points d'étanchéification (28, 28') sont disposés aux parties différentes dudit corps de soupape (16), qui sont mobiles l'une indépendamment de l'autre.

2. Soupape (10) selon la revendication 1, **caractérisée en ce que** ledit au moins un joint d'étanchéité (20) est fait complètement en métal.

3. Soupape (10) selon la revendication 1, **caractérisée en ce que** ledit au moins un joint d'étanchéité (20) comprend un revêtement (24) fait en un élastomère.

4. Soupape (10) selon une quelconque des revendications précédentes, **caractérisée en ce que** ledit élément de support (22) fait en métal comprend au moins une moulure en tant qu'un élément élastique.

5. Soupape (10) selon une quelconque des revendications précédentes, **caractérisée en ce que** ledit au moins un joint d'étanchéité (20) comprend une pluralité des couches d'étanchéification (26), qui sont disposées en un arrangement non parallèle relativement au sens d'étanchéification.

6. Soupape (10) selon une quelconque des revendications précédentes, **caractérisée en ce que** ledit espace (18) formé entre ledit carter de soupape (14) et ledit corps de soupape (16) est en outre subdivisé par un joint torique (30) et/ou par un joint d'étanchéité (32) moulé y appliqué, audit joint torique (30) et/ou ledit joint d'étanchéité moulé (32) consistent en un élastomère.

7. Soupape (10) selon une quelconque des revendications précédentes, **caractérisée en ce que** la soupape (10) est une soupape à 2/2 voies.

8. Soupape (10) selon une quelconque des revendications 1 à 6, **caractérisée en ce que** la soupape (10) est une soupape à 3/2 voies.

9. Contrôleur pneumatique de transmission, pourvu d'une soupape (10) selon une quelconque des revendications précédentes.
